# EUROPÄISCHE PATENTSCHRIFT

(11) **EP 4 116 511 B1**
(45) Veröffentlichungstag und Bekanntmachung des Hinweises auf die Patenterteilung: **12.11.2025**
(21) Anmeldenummer: 21184770.2
(22) Anmeldetag: 09.07.2021
(51) Int. Cl.: E03D 1/32, G05D 7/01, G05D 16/10, E03D 11/00

(54) **FÜLLVENTIL**
FILLING VALVE
SOUPAPE DE REMPLISSAGE

(43) Veröffentlichungstag der Anmeldung: 11.01.2023
(73) Patentinhaber: Geberit International AG, 8645 Jona (CH)
(72) Erfinder: BRICMAN, Marco, 2367 Vuzenica (SI); GVARDJANCIC, Tomaz, 2204 Miklavz (SI); SELAN, Klemen, 2000 Maribor (SI)
(74) Vertreter: Frischknecht, Harry Ralph

(56) Entgegenhaltungen:
- CN-A- 109 058 541
- DE-A1- 3 534 960
- US-A- 3 703 913

## Beschreibung

### TECHNISCHES GEBIET

Die vorliegende Erfindung betrifft ein Füllventil zur Befüllung eines Spülkastens nach Anspruch 1 und eine Anordnung nach Anspruch 15.

### STAND DER TECHNIK

Füllventile dienen der Befüllung von Spülkästen von Sanitärartikeln, wie Toiletten oder Urinalen.

Aus der EP 2 871 294 ist ein Füllventil bekannt geworden, welches im Wasserführungskanal ein Durchflussbegrenzungselement aufweist, welches den Durchfluss bei steigendem Wasserdruck so begrenzt, dass der Durchfluss des Wassers durch das Durchflussbegrenzungselement bei Erreichen und/oder Überschreiten eines vorbestimmten Wasserdruckes konstant gehalten wird.

Obschon mit dem Füllventil gemäss der EP 2 871 294 ein Füllventil bekannt geworden ist, welches sehr leise funktioniert, hat sich herausgestellt, dass die Wartung des Durchflussbegrenzungselements eher komplex ist.

Aus der DE 35 34 960 ist ein Füllventil bekannt geworden, welches einen Regelkolben aufweist, der sich quer zur Fliessrichtung bewegt.

### DARSTELLUNG DER ERFINDUNG

Ausgehend von diesem Stand der Technik liegt der Erfindung eine Aufgabe zugrunde, ein Füllventil anzugeben, welches die Nachteile des Standes der Technik überwindet. Insbesondere soll ein Füllventil angegeben werden, welches weniger anfällig auf Kalkablagerungen oder Verschmutzungen ist.

Diese Aufgabe löst der Gegenstand von Anspruch 1. Demgemäss umfasst ein Füllventil für die Befüllung eines Spülkastens ein Gehäuse, einen im Gehäuse angeordneten Wasserführungskanal mit einem Eingang und einem Ausgang, und ein im Wasserführungskanal angeordnetes Zuflussventil, welches den Wasserführungskanal sperrt bzw. bei der Befüllung frei gibt. Im Wasserführungskanal ist ein Durchflussregler mit einem Regelelement vorhanden, welcher den Durchfluss so regelt, dass bei steigendem Wasserdruck der Durchflussquerschnitt des Durchflussreglers verkleinert wird. Das Regelelement weist eine Spiralfeder auf, welche über ein stirnseitiges Ende an einer Lagerstelle im Wasserführungskanal gelagert ist, wobei ein distales Ende der Spiralfeder gegenüber dem stirnseitigen Ende bei steigendem Wasserdruck in Richtung des stirnseitigen Endes bewegbar ist, wobei durch die Bewegung die besagte Querschnittsverkleinerung erreicht wird.

Die Spiralfeder weist den Vorteil auf, dass diese bei ansteigenden Druck sich verformt, wobei allfällige auf der Spiralfeder liegende Kalkablagerungen oder Verschmutzungen von der Spiralfeder abgesprengt werden.

Vorzugsweise ist die Spiralfeder aus einem Federstahl ausgebildet. Hierdurch kann die Lebensdauer des Füllventils erhöht werden, da eine derart ausgebildete Feder sehr viele Lastzyklen ertragen kann.

Bei tiefen Wasserdrücken ist die Spiralfeder gestreckt und das Wasser kann ohne eine eigentliche Durchflussbegrenzung durch den Durchflussregler hindurchfliessen. Bei ansteigenden Wasserdrücken wird die Spiralfeder durch den Wasserdruck entsprechend komprimiert und der Durchflussquerschnitt durch den Durchflussregler hindurch wird verkleinert. Der Vorteil ist, dass bei tiefen Wasserdrücken ein grosser Volumenstrom durch den Durchflussregler hindurch fliessen kann und dass bei hohen Wasserdrücken ein kleiner Volumenstrom durch den Durchflussregler hindurch fliessen kann. Der Volumenstrom bei hohen Wasserdrücken wird demnach limitiert.

Das Zuflussventil wird vorzugsweise über ein Steuerungselement, insbesondere über einen Schwimmer, angesteuert. Es handelt sich vorzugsweise um ein schwimmergesteuertes Füllventil.

Vorzugsweise liegt der Durchflussregler in Fliessrichtung des Wassers gesehen vor dem Zuflussventil.

Vorzugsweise liegt das Regelelement mittig im Wasserführungskanal. Durch die mittige Anordnung ergehen strömungstechnische Vorteile. Die Spiralfeder kann durch die mittige Anordnung gleichmässig umströmt werden.

Vorzugsweise wird das Regelelement in Richtung der Mittelachse des Wasserführungskanals bewegt. Besonders bevorzugt wird das Regelelement ausschliesslich in Richtung der Mittelachse des Wasserführungskanals bewegt.

Die Bewegung in Richtung der Mittelachse ist eine longitudinale Bewegung bzw. eine Längsbewegung in Richtung der Mittelachse. Hierdurch ergeht der Vorteil, dass keine Elemente quer zur Strömungsrichtung bewegt werden, wodurch keine übermässigen bzw. unkontrollierten Strömungsverluste ergehen.

Vorzugsweise weist der Eingang eine Eintrittsöffnung auf, und das Regelelement ist in einem Abstand von maximal 100 Millimeter, insbesondere in einem Abstand von maximal 75 Millimeter, von der Eintrittsöffnung entfernt im Wasserführungskanal angeordnet.

Durch die geringe Entfernung zum Eingang kann des Regelelement sehr einfach eingebaut bzw. ausgebaut werden. Die erstmalige Montage und weitere Wartungsarbeiten werden dadurch erleichtert.

Mit anderen Worten gesagt, liegt das Regelelement in einem Abstandsbereich, der sich maximal 100 Millimeter oder bevorzugt maximal 75 Millimeter von der Eintrittsöffnung hinein erstreckt.

Weiter weist der Eingang aussenseitig ein Aussengewinde zum Anschluss des Füllventils an eine Wasserleitung und/oder zur Befestigung des Füllventils zu einem Spülkasten auf. Zur Befestigung kann beispielsweise eine Mutter auf das Aussengewinde aufgeschraubt werden. Das Aussengewinde definiert in Fliessrichtung gesehen einen Längenbereich, wobei das Regelelement im besagten Längenbereich angeordnet ist.

Vorzugsweise weist der Wasserführungskanal einen mittig im Wasserführungskanal liegenden Durchgang auf, wobei der Durchgang unabhängig von der Lage des Regelelements offen bleibt.

Hierdurch wird sichergestellt, dass im unwahrscheinlichen Fall einer Fehlfunktion des Regelelements oder bei unerwartet hohen Wasserdrücken der Wasserführungskanal frei bleibt.

Vorzugsweise liegt der Durchgang in Fliessrichtung des Wassers gesehen nach dem Regelelement.

In einer ersten Ausführungsform wird das Regelelement durch die Spiralfeder als solche bereitgestellt, wobei die Spiralfeder als solche derart ausgebildet ist, dass diese bei ansteigendem Wasserdruck komprimiert wird und dass durch die Komprimierung der Durchflussquerschnitt verkleinert wird.

In dieser Ausführungsform wird eine sehr einfache Konfiguration des Regelelements bereitgestellt, welche überdies sehr zuverlässig funktioniert.

Vorzugsweise weist die Spiralfeder gemäss der ersten Ausführungsform eine Vielzahl von Federwindungen auf, wobei der Durchmesser der Federwindungen in Fliessrichtung gesehen mit zunehmenden Abstand vom Eingang her gesehen kleiner wird, derart, dass bei einer Komprimierung der Spiralfeder der Durchflussquerschnitt verkleinert wird.

Vorzugsweise ist die Spiralfeder gemäss der ersten Ausführungsform konisch ausgebildet, wobei der Durchmesser der Spiralfeder kontinuierlich abnimmt.

Vorzugsweise ist der Durchmesser des Wasserführungskanals im Bereich der Spiralfeder gemäss der ersten Ausführungsform über eine erste Länge konstant und vorzugsweise verkleinert sich der Durchmesser nach der ersten Länge über eine zweite Länge, wobei die erste Länge bevorzugt wesentlich grösser ist als die zweite Länge.

Vorzugsweise stellt der verkleinerte Durchmesser die Lagerstelle für die Spiralfeder bereit.

In einer zweiten Ausführungsform weist das Regelelement weiter einen Stössel auf, wobei der Stössel mit der Spiralfeder in Verbindung steht.

Diese zweite Ausführungsform hat den Vorteil, dass eine genauere Abstimmung der Durchflussmenge in Relation zum Wasserdruck erreicht werden kann.

Die Spiralfeder kann als zylindrische Spiralfeder oder auch als Spiralfeder gemäss der ersten Ausführungsform bereitgestellt werden.

Vorzugsweise weist der Stössel eine Aufnahme auf, in welche die Spiralfeder einragt. Besonders bevorzugt bildet die Aufnahme weiterhin einen Aufnahmeraum für die komprimierten Teile der Feder.

Vorzugsweise weist der Stössel eine konische Stösselspitze auf, welche das Wasser seitlich um den Stössel lenkt.

Vorzugsweise ist der Stössel am distalen Ende der Spiralfeder fest angeordnet ist. Der Stössel kann beispielsweise über eine formschlüssige und/oder eine kraftschlüssige und/oder eine stoffschlüssige Verbindung mit dem Stössel verbunden werden.

Vorzugsweise ist der Innendurchmesser des Wasserführungskanals im Bewegungsbereich des Stössels in Fliessrichtung gesehen zulaufend ausgebildet, derart, dass der Innendurchmesser des Wasserführungskanals in Fliessrichtung gesehen abnimmt, so dass der Durchflussquerschnitt zwischen dem Stössel und dem Wasserführungskanal mit zunehmender Bewegung des Stössels in Fliessrichtung gesehen abnimmt.

Vorzugsweise läuft der Wasserführungskanal im Bewegungsbereich des Stössels konisch zu.

Vorzugsweise weist der Stössel eine Durchflussöffnung auf, welche unabhängig von der Lage des Stössels einen minimalen Durchflussquerschnitt bereitstellt. Zusätzlich oder alternative ist, wenn der Stössel in der Endlage ist, zwischen Stössel und Wandung des Durchflusskanals ein Spalt vorgesehen.

Die Durchflussöffnung und/oder der Spalt liegen dabei so, dass in jeder Lage des Stössels ein Wasserdurchtritt ermöglicht wird.

Vorzugsweise weist der Durchflussregler weiterhin einen Einsatz auf, an welchem das Regelelement gelagert ist, wobei der Einsatz eine Öffnung aufweist, welche einen Teil des Wasserführungskanals bereitstellt, und wobei der Einsatz in eine Aufnahme am Füllventil in das Füllventil einsetzbar ist.

Die Aufnahme liegt im Bereich des Eingangs. Der Einsatz hat den Vorteil, dass der Durchflussregler in einer vom Füllventil unabhängigen Struktur eingesetzt werden kann.

Eine Anordnung umfasst ein Füllventil nach obiger Beschreibung und einen Spülkasten, wobei der Spülkasten in seiner in Einbaulage unten liegenden Bodenwand eine Aufnahmeöffnung für die Aufnahme des Eingangs des Füllventils aufweist, und wobei sich das Füllventil in Einbaulage von der Bodenwand nach oben hin erstreckt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Füllventils mit einem Durchflussregler;
- Fig. 2: eine perspektivische Schnittdarstellung des Eingangs des Füllventils nach Figur 1 mit einer ersten Ausführungsform des Durchflussreglers;
- Fig. 3: eine Schnittdarstellung des Durchflussreglers gemäss der ersten Ausführungsform in einer ersten Lage;
- Fig. 4: eine Schnittdarstellung des Durchflussreglers gemäss der ersten Ausführungsform in einer zweiten Lage;
- Fig. 5: eine Schnittdarstellung des Durchflussreglers gemäss einer zweiten Ausführungsform in einer ersten Lage; und
- Fig. 6: eine Schnittdarstellung des Durchflussreglers gemäss der zweiten Ausführungsform in einer zweiten Lage.

### BESCHREIBUNG BEVORZUGTER AUSFÜHRUNGSFORMEN

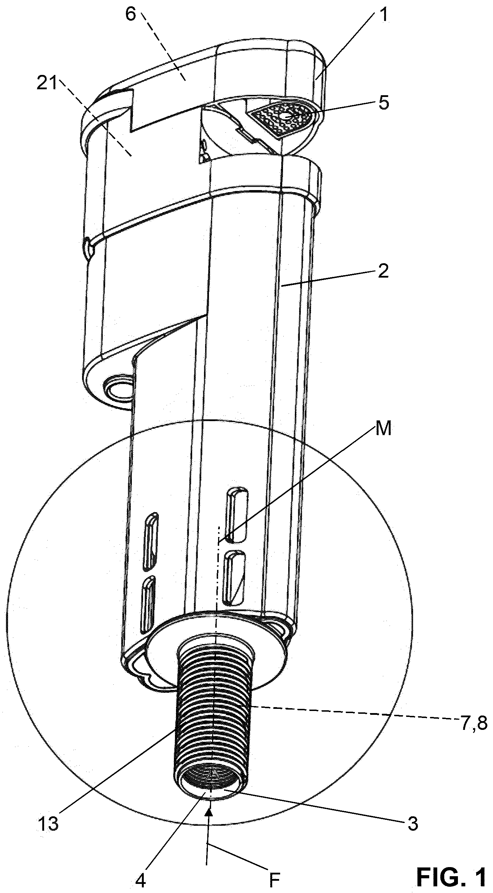

In der Figur 1 wird ein Füllventil 1 für die Befüllung eines Spülkastens gezeigt. Das Füllventil 1 ist hier so ausgebildet, dass sich das Füllventil 1 im Bereich einer Bodenwand des Spülkastens befestigen lässt und dann aufrecht im Spülkasten steht.

Das Füllventil 1 umfasst ein Gehäuse 2, einen im Gehäuse 2 angeordneten Wasserführungskanal 3 mit einem Eingang 4 und einem Ausgang 5 sowie ein im Wasserführungskanal 3 angeordnetes Zuflussventil 6. Über den Eingang 4 fliesst das Spülwasser über das Zuflussventil 6 zum Ausgang 5, von wo das Spülwasser schliesslich in den Spülkasten gelangt.

Das Zuflussventil 6 kann von einer Verschlusslage, in welcher der Wasserführungskanal 3 gesperrt ist, in eine Durchflusslage, in welcher der Wasserführungskanal 3 freigegeben ist, bewegt werden. Das Zuflussventil 6 wird vorzugsweise über einen Schwimmer angesteuert. Der Schwimmer ist in der gezeigten Ausführungsform im Gehäuse 2 in einer Schwimmerkammer 21 angeordnet.

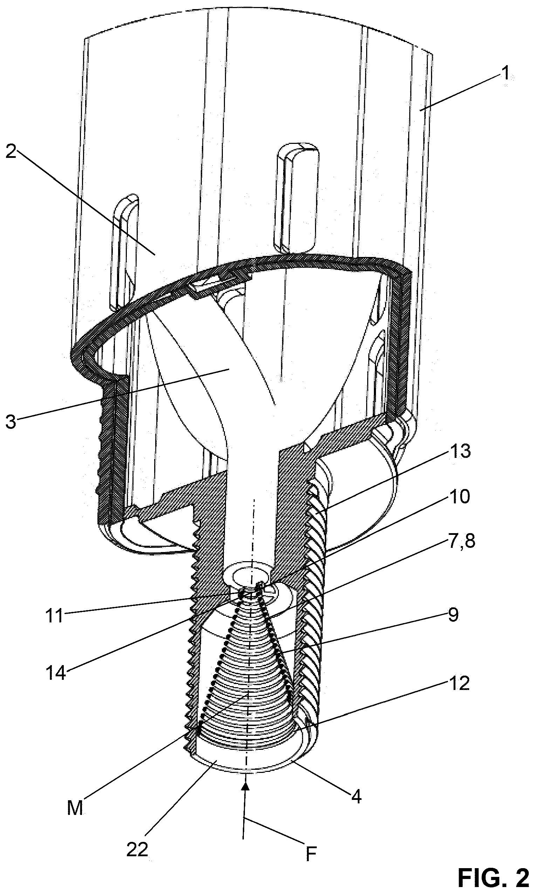

In der Figur 2 wird eine teilweise geschnittene Ansicht des Füllventils 1 gezeigt. Wie von der Figur 2 ersichtlich ist, umfasst das Füllventil 1 weiterhin einen Durchflussregler 7, welcher ein Regelelement 8 aufweist. Der Durchflussregler 7 regelt den Durchfluss im Wasserführungskanal 3 derart, dass bei steigendem Wasserdruck der Durchflussquerschnitt ist Durchflussreglers 7 verkleinert wird. Das Regelelement 8 weist eine Spiralfeder 9 auf. Die Spiralfeder 9 ist über ein stirnseitiges Ende 10 an einer Lagerstelle 11 im Wasserführungskanal 3 gelagert. Ein distales Ende 12 der Spiralfeder 9 liegt gegenüber dem stirnseitigen Ende 10. Dieses distales Ende 12 wird bei steigendem Wasserdruck in Richtung des stirnseitigen Endes 10 bewegt. Über diese Bewegung wird die besagte Querschnittsverkleinerung erreicht. In Fliessrichtung F gesehen liegt das distale Ende 12 vor dem stirnseitigen Ende 10.

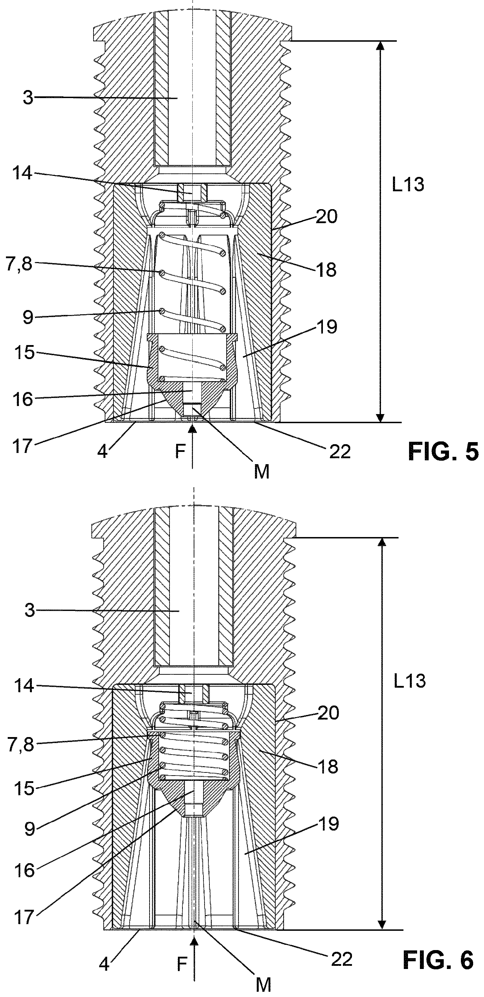

In den Figuren 2 bis 4 wird eine erste Ausführungsform des Durchflussreglers 7 gezeigt. In den Figuren 5 und 6 wird eine zweite Ausführungsform des Durchflussreglers 7 gezeigt.

Bei beiden Ausführungsformen liegt das Regelelement 8 mittig im Wasserführungskanal 3. Das Regelelement 8 wird somit gleichmässig durch das im Wasserführungskanal 3 fliessende Wasser umströmt.

Das Regelelement 8 wird weiter in Richtung der Mittelachse M des Wasserführungskanals 3 bewegt. Besonders bevorzugt wird das Regelelement 8 ausschliesslich in Richtung der Mittelachse M des Wasserführungskanals 3 bewegt, das heisst, dass das Regelelement 8 keine Bewegung quer zur Mittelachse M ausführt.

Der Eingang 4 weist eine Eintrittsöffnung 22 auf. Das Regelelement 8 liegt dabei in einem geringen Abstand zur Eintrittsöffnung 22. Dies hat den Vorteil, dass der Durchfluss bereits beim Einlass in das Füllventil 1 geregelt wird. Besonders bevorzugt liegt das Regelelement 8 in einem Abstand von maximal 100 Millimeter, insbesondere in einem Abstand von maximal 75 Millimeter, von der Eintrittsöffnung 22 entfernt.

Aussenseitig weist der Eingang ein Aussengewinde 13 zum Anschluss des Füllventils 1 an eine Wasserleitung bzw. zur Befestigung des Füllventils 1 an einem Spülkasten auf. Das Aussengewinde 13 weist in Fliessrichtung F gesehen einen Längenbereich L13 auf. Das Regelelement 8 ist dabei im besagten Längenbereich angeordnet.

Der Wasserführungskanal 3 weist einen Durchgang 14 auf, welcher mittig im Wasserführungskanal 3 liegt. Der Durchgang 14 ist dabei derart angeordnet, dass der Durchgang 14 unabhängig von der Lage des Regelelements 8 offen bleibt. Somit wird bei jeder Lage des Regelelements 8 sichergestellt, dass Wasser durch den Wasserführungskanal 3 fliessen kann. Weitere Durchgänge können seitlich zum Durchgang 14 angeordnet sein.

In der ersten Ausführungsform gemäss den Figuren 2 bis 4 wird das Regelelement 8 durch die Spiralfeder 9 als solche bereitgestellt. Die Spiralfeder 9 ist dabei derart ausgebildet, dass diese bei ansteigendem Wasserdruck komprimiert wird. Über die Komprimierung der Spiralfeder 9 wird der Durchflussquerschnitt verkleinert. In der ersten Ausführungsform weist die Spiralfeder 9 eine Vielzahl von Federwindungen auf, wobei der Durchmesser der Federwindungen in Fliessrichtung F mit zunehmendem Abstand vom Eingang 4 her gesehen kleiner wird. Die Ausbildung ist dabei derart, dass bei einer Komprimierung der Spiralfeder 9 der Durchflussquerschnitt verkleinert wird. In der gezeigten Ausführungsform ist die Spiralfeder 9 konisch ausgebildet. Der Durchmesser der Federwindungen nimmt dabei über die Länge der Spiralfeder 9 kontinuierlich ab.

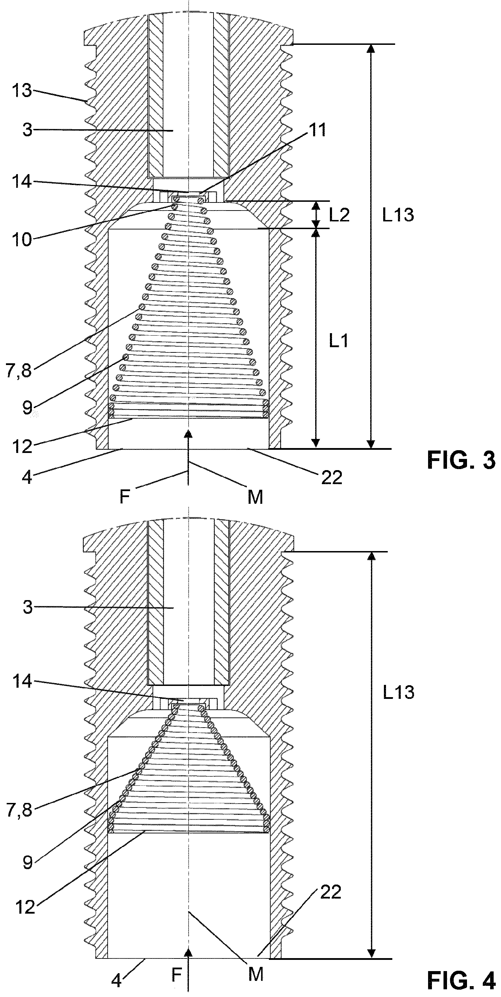

Von den Querschnittsdarstellungen der Figuren 3 und 4 wird ersichtlich, dass der Durchmesser des Wasserführungskanals 3 im Bereich der Spiralfeder 9 über eine erste Länge L1 konstant ist und dass sich der Durchmesser nach der ersten Länge L1 über eine zweite Länge L2 verkleinert. Am Ende der zweiten Länge ist die Lagerstelle 11, an welcher die Spiralfeder 9 gelagert ist.

In der Figur 3 wird die Spiralfeder 9 in der Lage mit dem maximalen Durchflussquerschnitt gezeigt. In der Figur 4 wird die Spiralfeder 9 in der Lage mit minimalen Durchflussquerschnitt gezeigt.

In der zweiten Ausführungsform weist das Regelelement 8 weiter einen Stössel 15 auf. Der Stössel 15 steht dabei mit der Spiralfeder 9 in Verbindung. Der Stössel 15 ist dabei am distalen Ende 12 der Spiralfeder 9 fest angeordnet. Der Innendurchmesser des Wasserführungskanals 3 ist im Bewegungsbereich des Stössel 15 in Fliessrichtung F gesehen zulaufend ausgebildet. Demnach nimmt der Innendurchmesser des Wasserführungskanals 3 in Fliessrichtung F gesehen ab, sodass der Durchflussquerschnitt zwischen dem Stössel 15 und dem Wasserführungskanal 3 mit zunehmender Bewegung des Stössels 15 in Fliessrichtung F gesehen abnimmt. Hierdurch wird der Durchflussquerschnitt bei steigendem Druck reduziert, weil der Stössel 15 mit steigendem Druck weiter in den Wasserführungskanal 3 hinein bewegt wird.

In der gezeigten Ausführungsform weist der Stössel 15 eine Durchflussöffnung 16 auf. Die Durchflussöffnung 16 stellt unabhängig von der Lage des Stössels 15 einen minimalen Durchflussquerschnitt bereit. In der Figur 5 wird die Lage des Stössel 15 mit dem maximalen Durchflussquerschnitt gezeigt. In der Figur 6 wird die Lage des Stössel 15 mit dem minimalen Durchflussquerschnitt gezeigt. Hier liegt der Stössel 15 derart, dass im Wesentlichen die Durchflussöffnung 16 den minimalen Durchflussquerschnitt definiert.

Die Frontseite des Stössels 15, welche gegen den Eingang 4 gerichtet ist, weist eine konische Stösselspitze 17 auf. Die besagte Durchflussöffnung 16 erstreckt sich von der Stösselspitze 17 durch den Stössel 15 hindurch.

In der gezeigten zweiten Ausführungsform weist der Durchflussregler 7 weiterhin einen Einsatz 18 auf. An diesem Einsatz 18 ist das Regelelement 8 gelagert. Der Einsatz 18 weist dabei eine Öffnung 19 auf, welche einen Teil des Wasserführungskanals 3 bereitstellt. Weiter ist der Einsatz 18 in eine Aufnahme 20 am Füllventil 1 in das Füllventil 1 einsetzbar. Der Einsatz kann auch bei der ersten Ausführungsform vorgesehen sein.

### BEZUGSZEICHENLISTE

| | | | |
|---|---|---|---|
| 1 | Füllventil | 20 | Aufnahme |
| 2 | Gehäuse | 21 | Schwimmerkammer |
| 3 | Wasserführungskanal | 22 | Eintrittsöffnung |
| 4 | Eingang | | |
| 5 | Ausgang | L1 | erste Länge |
| 6 | Zuflussventil | L2 | zweite Länge |
| 7 | Durchflussregler | L13 | Längenbereich |
| 8 | Regelelement | F | Fliessrichtung |
| 9 | Spiralfeder | M | Mittelachse |
| 10 | stirnseitiges Ende | | |
| 11 | Lagerstelle | | |
| 12 | distales Ende | | |
| 13 | Aussengewinde | | |
| 14 | Durchgang | | |
| 15 | Stössel | | |
| 16 | Durchflussöffnung | | |
| 17 | Stösselspitze | | |
| 18 | Einsatz | | |
| 19 | Öffnung | | |

## Patentansprüche

1. Füllventil (1) für die Befüllung eines Spülkastens umfassend
ein Gehäuse (2),
ein im Gehäuse (2) angeordneten Wasserführungskanal (3) mit einem Eingang (4) und einem Ausgang (5), und
ein im Wasserführungskanal (3) angeordnetes Zuflussventil (6), welches den Wasserführungskanal (3) sperrt bzw. bei der Befüllung frei gibt,
wobei im Wasserführungskanal (3) ein Durchflussregler (7) mit einem Regelelement (8) vorhanden ist, welcher den Durchfluss so regelt, dass bei steigendem Wasserdruck der Durchflussquerschnitt des Durchflussreglers (7) verkleinert wird, **dadurch gekennzeichnet,**
**dass** das Regelelement (8) eine Spiralfeder (9) aufweist, welche über ein stirnseitiges Ende (10) an einer Lagerstelle (11) im Wasserführungskanal (3) gelagert ist, wobei ein distales Ende (12) der Spiralfeder (9) gegenüber dem stirnseitigen Ende (10) bei steigendem Wasserdruck in Richtung des stirnseitigen Endes (10) bewegbar ist, wobei durch die Bewegung die besagte Querschnittsverkleinerung erreicht wird, und dass der Eingang (4) aussenseitig ein Aussengewinde (13) zum Anschluss des Füllventils (1) an eine Wasserleitung und/oder zur Befestigung des Füllventils zu einem Spülkasten aufweist, wobei das Aussengewinde (13) in Fliessrichtung gesehen einen Längenbereich (L13) definiert, wobei das Regelelement (8) im besagten Längenbereich (L13) angeordnet ist.

2. Füllventil (1) nach Anspruch 1, **dadurch gekennzeichnet, dass** das Regelelement (8) mittig im Wasserführungskanal (3) liegt.

3. Füllventil (1) nach Anspruch 1 oder 2, **dadurch gekennzeichnet, dass** das Regelelement (8) in Richtung der Mittelachse (M) des Wasserführungskanals (3) bewegt wird, insbesondere, dass das Regelelement (8) ausschliesslich in Richtung der Mittelachse (M) des Wasserführungskanals (3) bewegt wird.

4. Füllventil (1) nach einem der vorhergehenden Ansprüche, **dadurch gekennzeichnet, dass** der Eingang (4) eine Eintrittsöffnung (22) aufweist, und dass das Regelelement (8) in einem Abstand von maximal 100 Millimeter, insbesondere in einem Abstand von maximal 75 Millimeter, von der Eintrittsöffnung (22) entfernt im Wasserführungskanal (3) angeordnet ist.

5. Füllventil (1) nach einem der vorhergehenden Ansprüche, **dadurch gekennzeichnet, dass** der Wasserführungskanal (3) einen mittig im Wasserführungskanal (3) liegenden Durchgang (14) aufweist, wobei der Durchgang (14) unabhängig von der Lage des Regelelements (8) offen bleibt.

6. Füllventil (1) nach einem der vorhergehenden Ansprüche 1 bis5, **dadurch gekennzeichnet, dass** das Regelelement (8) durch die Spiralfeder (9) bereitgestellt ist, wobei die Spiralfeder (9) als solche derart ausgebildet ist, dass diese bei ansteigendem Wasserdruck komprimiert wird und dass durch die Komprimierung der Durchflussquerschnitt verkleinert wird.

7. Füllventil (1) nach Anspruch 6, **dadurch gekennzeichnet, dass** die Spiralfeder (9) eine Vielzahl von Federwindungen aufweist, wobei der Durchmesser der Federwindungen in Fliessrichtung (F) gesehen mit zunehmenden Abstand vom Eingang (4) her gesehen kleiner wird, derart, dass bei einer Komprimierung der Spiralfeder (9) der Durchflussquerschnitt verkleinert wird.

8. Füllventil (1) nach Anspruch 7, **dadurch gekennzeichnet, dass** die Spiralfeder (9) konisch ausgebildet ist, wobei der Durchmesser der Spiralfeder (9) kontinuierlich abnimmt.

9. Füllventil (1) nach einem der Ansprüche 6 bis 8, **dadurch gekennzeichnet, dass** der Durchmesser des Wasserführungskanals (3) im Bereich der Spiralfeder (9) über eine erste Länge (L1) konstant ist und dass sich der Durchmesser nach der ersten Länge (L1) sich über eine zweite Länge (L2) verkleinert, wobei die erste Länge (L1) bevorzugt wesentlich grösser ist als die zweite Länge (L2).

10. Füllventil (1) nach einem der vorhergehenden Ansprüche, insbesondere nach einem der vorhergehenden Ansprüche 1 bis 5, **dadurch gekennzeichnet, dass** Regelelement (8) weiter einen Stössel (15) aufweist, wobei der Stössel (15) mit der Spiralfeder (9) in Verbindung steht.

11. Füllventil (1) nach Anspruch 10, **dadurch gekennzeichnet, dass** der Stössel (15) am distalen Ende (12) der Spiralfeder (9) fest angeordnet ist.

12. Füllventil (1) nach einem der vorhergehenden Ansprüche 10 bis 11, **dadurch gekennzeichnet, dass** der Innendurchmesser des Wasserführungskanals (3) im Bewegungsbereich des Stössels (15) in Fliessrichtung (F) gesehen zulaufend ausgebildet ist, derart, dass der Innendurchmesser des Wasserführungskanals (3) in Fliessrichtung (F) gesehen abnimmt, so dass der Durchflussquerschnitt zwischen dem Stössel (15) und dem Wasserführungskanal (3) mit zunehmender Bewegung des Stössels (15) in Fliessrichtung (F) gesehen abnimmt.

13. Füllventil (1) nach einem der vorhergehenden Ansprüche 10 bis 11, **dadurch gekennzeichnet, dass** der Stössel (15) eine Durchflussöffnung (16) aufweist, welche unabhängig von der Lage des Stössels (15) einen minimalen Durchflussquerschnitt bereitstellt; und/oder dass wenn der Stössel (15) in der Endlage ist, zwischen Stössel (15) und Wandung des Durchflusskanals ein Spalt vorgesehen ist.

14. Füllventil (1) nach einem der vorhergehenden Ansprüche, **dadurch gekennzeichnet, dass** der Durchflussregler (7) weiterhin einen Einsatz (18) aufweist, an welchem das Regelelement (8) gelagert ist, wobei der Einsatz (18) eine Öffnung (19) aufweist, welche einen Teil des Wasserführungskanals (3) bereitstellt, und wobei der Einsatz (18) in eine Aufnahme (20) am Füllventil (1) in das Füllventil (1) einsetzbar ist.

15. Anordnung umfassend ein Füllventil nach einem der vorhergehenden Ansprüche und einen Spülkasten, wobei der Spülkasten in seiner in Einbaulage unten liegenden Bodenwand eine Aufnahmeöffnung für die Aufnahme des Eingangs des Füllventils aufweist, und wobei sich das Füllventil in Einbaulage von der Bodenwand nach oben hin erstreckt.

## Claims

1. Filling valve (1) for filling a cistern, comprising
a housing (2),
a water flow channel (3) arranged in the housing (2) with an inlet (4) and an outlet (5), and
an inlet valve (6) arranged in the water flow channel (3), which closes the water flow channel (3) or opens it during filling,
wherein a flow regulator (7) with a control element (8) is provided in the water flow channel (3), which regulates the flow in such a way that the flow cross-section of the flow regulator (7) is reduced when the water pressure increases, **characterised in that**
that the control element (8) has a coil spring (9) which is mounted via a front end (10) at a bearing point (11) in the water flow channel (3), wherein a distal end (12) of the coil spring (9) opposite the front end (10) is movable in the direction of the front end (10) when the water pressure increases, wherein the movement achieves the aforementioned reduction in cross-section, and **in that** the inlet (4) has an external thread (13) on the outside for connecting the filling valve (1) to a water pipe and/or for attaching the filling valve to a cistern, wherein the external thread (13) defines a length range (L13) as seen in the direction of flow, wherein the control element (8) is arranged in said length range (L13).

2. Filling valve (1) according to claim 1, **characterised in that** the control element (8) is located centrally in the water flow channel (3).

3. Filling valve (1) according to claim 1 or 2, **characterised in that** the control element (8) is moved in the direction of the central axis (M) of the water flow channel (3), in particular that the control element (8) is moved exclusively in the direction of the central axis (M) of the water flow channel (3).

4. Filling valve (1) according to one of the preceding claims, **characterised in that** the inlet (4) has an inlet opening (22) and that the control element (8) is arranged in the water flow channel (3) at a distance of no more than 100 millimetres, in particular at a distance of no more than 75 millimetres, from the inlet opening (22).

5. Filling valve (1) according to one of the preceding claims, **characterised in that** the water flow channel (3) has a passage (14) located centrally in the water flow channel (3), wherein the passage (14) remains open regardless of the position of the control element (8).

6. Filling valve (1) according to one of the preceding claims 1 to 5, **characterised in that** the control element (8) is provided by the coil spring (9), wherein the coil spring (9) is designed such that it is compressed when the water pressure rises and that the flow cross-section is reduced by the compression.

7. Filling valve (1) according to claim 6, **characterised in that** the coil spring (9) has a plurality of spring coils, wherein the diameter of the spring coils, viewed in the direction of flow (F), becomes smaller with increasing distance from the inlet (4), such that the flow cross-section is reduced when the coil spring (9) is compressed.

8. Filling valve (1) according to claim 7, **characterised in that** the coil spring (9) is conical in shape, with the diameter of the coil spring (9) decreasing continuously.

9. Filling valve (1) according to one of claims 6 to 8, **characterised in that** the diameter of the water flow channel (3) in the area of the coil spring (9) is constant over a first length (L1) and that the diameter after the first length (L1) decreases over a second length (L2), the first length (L1) preferably being substantially greater than the second length (L2).

10. Filling valve (1) according to one of the preceding claims, in particular according to one of the preceding claims 1 to 5, **characterised in that** the control element (8) further comprises a tappet (15), wherein the tappet (15) is connected to the coil spring (9).

11. Filling valve (1) according to claim 10, **characterised in that** the tappet (15) is fixedly arranged at the distal end (12) of the coil spring (9).

12. Filling valve (1) according to one of the preceding claims 10 to 11, **characterised in that** the inner diameter of the water flow channel (3) in the movement range of the tappet (15) is designed to taper in the direction of flow (F) in such a way that the inner diameter of the water flow channel (3) decreases in the direction of flow (F), so that the flow cross-section between the tappet (15) and the water flow channel (3) decreases with increasing movement of the tappet (15) in the direction of flow (F).

13. Filling valve (1) according to one of the preceding claims 10 to 12, **characterised in that** the tappet (15) has a flow opening (16) which provides a minimum flow cross-section regardless of the position of the tappet (15); and/or **in that** when the tappet (15) is in the end position, a gap is provided between the tappet (15) and the wall of the flow channel.

14. Filling valve (1) according to one of the preceding claims, **characterised in that** the flow regulator (7) further comprises an insert (18) on which the control element (8) is mounted, wherein the insert (18) has an opening (19) which provides part of the water flow channel (3), and wherein the insert (18) can be inserted into a receptacle (20) on the filling valve (1) in the filling valve (1).

15. Arrangement comprising a filling valve according to one of the preceding claims and a cistern, wherein the cistern has a receiving opening in its bottom wall, which is located at the bottom in the installation position, for receiving the inlet of the filling valve, and wherein the filling valve extends upwards from the bottom wall in the installation position.

## Revendications

1. Vanne de remplissage (1) pour le remplissage d'un réservoir de chasse d'eau, comprenant
un boîtier (2),
un canal de guidage d'eau (3) disposé dans le boîtier (2) avec une entrée (4) et une sortie (5), et
une vanne d'alimentation (6) disposée dans le canal de guidage d'eau (3), qui bloque le canal de guidage d'eau (3) ou le libère lors du remplissage,
un régulateur de débit (7) avec un élément de régulation (8) étant prévu dans le canal de guidage d'eau (3), lequel régule le débit de telle sorte que la section transversale de passage du régulateur de débit (7) est rétrécie lorsque la pression d'eau augmente, **caractérisée en ce que**
l'élément de régulation (8) comporte un ressort spiral (9) qui est monté par une extrémité frontale (10) sur un support (11) dans le canal de guidage d'eau (3), une extrémité distale (12) du ressort spiral (9) étant mobile par rapport à l'extrémité frontale (10) en direction de l'extrémité frontale (10) lorsque la pression de l'eau augmente, ledit rétrécissement de la section transversale étant obtenu par le mouvement et que l'entrée (4) présente à l'extérieur un filetage extérieur (13) pour raccorder la vanne de remplissage (1) à une conduite d'eau et/ou pour fixer la vanne de remplissage à un réservoir de chasse d'eau, le filetage extérieur (13) définissant, vu dans le sens d'écoulement, une zone longitudinale (L13), l'élément de régulation (8) étant disposé dans ladite zone longitudinale (L13).

2. Vanne de remplissage (1) selon la revendication 1, **caractérisée en ce que** l'élément de régulation (8) est situé au centre du canal de guidage d'eau (3).

3. Vanne de remplissage (1) selon la revendication 1 ou 2, **caractérisée en ce que** l'élément de régulation (8) est déplacé en direction de l'axe central (M) du canal de guidage d'eau (3), en particulier **en ce que** l'élément de régulation (8) est déplacé exclusivement en direction de l'axe central (M) du canal de guidage d'eau (3).

4. Vanne de remplissage (1) selon l'une quelconque des revendications précédentes, **caractérisée en ce que** l'entrée (4) présente une ouverture d'entrée (22) et **en ce que** l'élément de régulation (8) est disposé dans le canal de guidage d'eau (3) à une distance maximale de 100 millimètres, en particulier à une distance maximale de 75 millimètres, de l'ouverture d'entrée (22).

5. Vanne de remplissage (1) selon l'une quelconque des revendications précédentes, **caractérisée en ce que** le canal de guidage d'eau (3) présente un passage (14) situé au centre du canal de guidage d'eau (3), le passage (14) restant ouvert indépendamment de la position de l'élément de régulation (8).

6. Vanne de remplissage (1) selon l'une des revendications précédentes 1 à 5, **caractérisée en ce que** l'élément de régulation (8) est fourni par le ressort spiral (9), le ressort spiral (9) étant conçu de telle sorte qu'il se comprime lorsque la pression de l'eau augmente et que la compression réduise la section transversale de passage.

7. Vanne de remplissage (1) selon la revendication 6, **caractérisée en ce que** le ressort spiral (9) comporte une pluralité de spires, le diamètre des spires, vu dans le sens d'écoulement (F), diminuant à mesure que la distance par rapport à l'entrée (4) augmente, de telle sorte que la section de passage soit réduite lorsque le ressort spiral (9) est comprimé.

8. Vanne de remplissage (1) selon la revendication 7, **caractérisée en ce que** le ressort spiral (9) est de forme conique, le diamètre du ressort spiral (9) diminuant de manière continue.

9. Vanne de remplissage (1) selon l'une des revendications 6 à 8, **caractérisée en ce que** le diamètre du canal de guidage d'eau (3) au niveau du ressort spiral (9) est constant sur une première longueur (L1) et **en ce que** le diamètre après la première longueur (L1) diminue sur une deuxième longueur (L2), la première longueur (L1) étant de préférence nettement plus grande que la deuxième longueur (L2).

10. Vanne de remplissage (1) selon l'une quelconque des revendications précédentes, en particulier selon l'une des revendications 1 à 5 précédentes, **caractérisée en ce que** l'élément de régulation (8) comporte en outre un poussoir (15), le poussoir (15) étant relié au ressort spiral (9).

11. Vanne de remplissage (1) selon la revendication 10, **caractérisée en ce que** le poussoir (15) est fixé à l'extrémité distale (12) du ressort spiral (9).

12. Vanne de remplissage (1) selon l'une des revendications précédentes 10 à 11, **caractérisée en ce que** le diamètre intérieur du canal de guidage d'eau (3) dans la zone de mouvement du poussoir (15) est conçu de manière à diminuer dans le sens d'écoulement (F), de telle sorte que le diamètre intérieur du canal d'écoulement d'eau (3) vu dans le sens d'écoulement (F) diminue, de sorte que la section transversale de passage entre le poussoir (15) et le canal d'écoulement d'eau (3) diminue avec l'augmentation du mouvement du poussoir (15) vu dans le sens d'écoulement (F).

13. Vanne de remplissage (1) selon l'une des revendications précédentes 10 à 11, **caractérisée en ce que** le poussoir (15) présente une ouverture d'écoulement (16) qui fournit une section transversale d'écoulement minimale indépendamment de la position du poussoir (15) ; et/ou **en ce que**, lorsque le poussoir (15) est en position finale, un interstice est prévu entre le poussoir (15) et la paroi du canal d'écoulement.

14. Vanne de remplissage (1) selon l'une quelconque des revendications précédentes, **caractérisée en ce que** le régulateur de débit (7) comporte en outre un insert (18) sur lequel est monté l'élément de régulation (8), l'insert (18) comportant une ouverture (19) qui fournit une partie du canal d'écoulement d'eau (3), et l'insert (18) pouvant être inséré dans la vanne de remplissage (1) dans un logement (20) sur la vanne de remplissage (1).

15. Dispositif comprenant une vanne de remplissage selon l'une quelconque des revendications précédentes et un réservoir de chasse d'eau, le réservoir de chasse d'eau présentant dans sa paroi inférieure, située en bas dans la position de montage, une ouverture de logement pour recevoir l'entrée de la vanne de remplissage, et la vanne de remplissage s'étendant vers le haut à partir de la paroi inférieure dans la position de montage.
